# EUROPÄISCHE PATENTANMELDUNG

(11) **EP 1 630 031 A2**
(43) Veröffentlichungstag der Anmeldung: **01.03.2006**
(21) Anmeldenummer: 05009199.0
(22) Anmeldetag: 27.04.2005
(51) Int. Cl.: B60N 2/02, B60N 2/44

(54) **Fahrzeugsitz**

(30) Priorität: 27.08.2004 DE 102004042016
(71) Anmelder: IAV GMBH INGENIEURGESELLSCHAFT AUTO UND VERKEHR, 10587 Berlin (DE)
(72) Erfinder: Klinge, Michael, 39343 Uhrsleben (DE); Ritter, Johannes, 38550 Isenbüttel (DE); Ullrich, Peter, 38302 Wolfenbüttel (DE)
(74) Vertreter: Bürger, Peter

(57) **Zusammenfassung**

Die Erfindung betrifft einen Fahrzeugsitz mit einer Sitzfläche und mit einer Rückenlehne, in denen Polsterungen angeordnet sind, die aus einer Mehrzahl von einzelnen in Sitzquerrichtung getrennten Polsterelementen bestehen, die gegenüber einem Sitzgestell und einem Rückenlehnengestell längsverschieblich angeordnet sind.

Der Erfindung liegt die Aufgabe zugrunde, einen Fahrzeugsitz zu schaffen, der individuell auf verschiedene Körpermaße der jeweiligen Fahrzeuginsassen derart einstellbar ist, dass bei einer ergonomiegerechten Sitzposition in allen Fahrsituationen eine sichere Sitzposition unter Aufnahme von auftretenden Seitenkräften gewährleistet wird.

Erfindungsgemäß sind die Sitzfläche 1 und die Rückenlehne 2 unabhängig voneinander in der Länge der Sitzfläche 1 und in der Breite der vorderen Sitzfläche 1 sowie in der Länge und Breite der Rückenlehne 2 verstellbar. Dabei ist der vordere Bereich der Sitzfläche 1 in mehrere in Sitzlängs- und -querrichtung getrennte einzelne Polsterteile 6 und/oder die Anlehnfläche der Rückenlehne 3 in mehrere in Längs- und Querrichtung getrennte einzelne Polsterteile 4 unterteilt, wobei die Polsterteile 6 der Sitzfläche 1 und die Polsterteile 4 der Rückenlehne 2 unabhängig voneinander jeweils in zwei Dimensionen verstellbar angeordnet sind.

## Beschreibung

Die Erfindung betrifft einen Fahrzeugsitz mit den im Oberbegriff des Patentanspruches 1 genannten Merkmalen.

Um eine ergonomiegerechte Sitzposition im Fahrzeug zu erreichen, muss der Fahrzeuginsasse die Möglichkeit haben, den Sitz individuell auf seine Körpermaße einstellen zu können. Das Ziel ist eine optimale Anpassung der Polsterkonturen an die Körperkontur des Benutzers.

Aus der DE 30 18 323 C2 ist ein verstellbarer Fahrzeugsitz vorbekannt, der durch Verstellung an unterschiedliche Körperkonturen anpassbar ist und somit ein ermüdungsfreies Sitzen ermöglicht. Dabei ist das Sitzgestell unabhängig von dem Rückenlehnengestell gegenüber der Fahrzeugzelle in der Höhe und das Rückenlehnengestell unabhängig vom Sitzgestell in der Fahrzeuglängsrichtung und in der Höhe gegenüber der Fahrzeugzelle verstellbar. In dem Sitzgestell und dem Rückenlehnengestell sind Polsterungen angeordnet, die aus einer Mehrzahl von einzelnen in Sitzquerrichtung getrennten Polsterelementen bestehen. Die Polsterelemente sind gegenüber einem Sitzgestell und einem Rückenlehnengestell längsverschieblich angeordnet. Bei einer Verstellung der Sitztiefe wird das Sitzkissen in Sitzlängsrichtung verschoben, wobei sich zwischen den einzelnen Polsterelementen Spalte oder Aussparungen von unterschiedlicher Breite bilden.

Nachteilig bei dieser Lösung ist, dass auf der Sitzfläche in Querrichtung unterschiedlich breite Schlitze entstehen, die den Sitzkomfort wesentlich beeinträchtigen. Eine Anpassung des Sitzes an unterschiedliche Körperformen erfolgt mit diesem Sitz nicht.

Aus der DE 199 43 707 A1 ist ein Fahrzeugsitz bekannt, bei dem das Sitzteil und die Rückenlehne jeweils zweiteilig ausgebildet sind und jeweils aus einem Grund- und einem Verlängerungskörper bestehen. Der Verlängerungskörper des Sitzteils ist in Sitzlängsrichtung gegenüber dem Grundkörper verstellbar befestigt, während der Verlängerungskörper der Rückenlehne in axialer Richtung der Rückenlehne gegenüber dem Grundkörper verstellbar angeordnet ist.

Nachteilig ist, dass eine Verstellung des Fahrzeugsitzes nur in der Längsachse der Sitzfläche und/oder in der Längsachse der Rückenlehne durchgeführt werden kann. Eine Anpassung des Sitzes an verschiedene Körperbreiten von unterschiedlichen Passagieren kann nicht vorgenommen werden.

Aus der DE 196 05 779 C2 ist ein Fahrzeugsitz vorbekannt, bei dem der Sitz zur Anpassung an einen Sitzbenutzer mit einem breiten Körperbau mit verstellbaren Sitz- und Lehnenwangen versehen ist. Die Sitz- und/oder Lehnenwangen sind beweglich gehalten und über eine mechanische Verstelleinrichtung von einer weiten, zur Fahrzeugsitzaußenseite hin liegenden Position in eine schmalere, zur Fahrzeugmitte hin liegende Position verstellbar.

Nachteilig bei dieser Lösung ist, dass bei ausgeschwenkten Sitz- und/oder Lehnenwangen infolge einer Sitzbelegung durch einen Fahrzeuginsassen mit einem breiteren Körperbau eine mangelhafte seitliche Unterstützung des Körpers bei einer Kurvenfahrt erfolgt.

Der Erfindung liegt die Aufgabe zugrunde, einen Fahrzeugsitz zu schaffen, der individuell auf verschiedene Körpermaße der jeweiligen Fahrzeuginsassen derart einstellbar ist, dass bei einer ergonomiegerechten Sitzposition in allen Fahrsituationen eine sichere Sitzposition unter Aufnahme von auftretenden Seitenkräften gewährleistet wird.

Diese Aufgabe wird erfindungsgemäß durch die kennzeichnenden Merkmale des Patentanspruches 1 gelöst.

Dadurch, dass die Sitzfläche des Fahrzeugsitzes im vorderen Bereich in mehrere in Sitzlängs- und -querrichtung getrennte einzelne Polsterteile und die Anlehnfläche der Rückenlehne in mehrere in Längs- und Querrichtung getrennte einzelne Polsterteile unterteilt sind, wobei die Polsterteile der Sitzfläche und die Polsterteile der Rückenlehne unabhängig voneinander jeweils in zwei Dimensionen verstellbar angeordnet sind, wird erreicht, dass der Fahrzeugsitz individuell auf die Körpermaße des Sitzbenutzers eingestellt werden kann. Durch die unterschiedliche Einstellung der Länge und der Breite der Rückenlehne sowie der Länge und der vorderen Breite der Sitzfläche in Verbindung mit einer an sich bekannten Längs- und Höhenverstellung des Fahrzeugsitzes und einer Neigungsverstellung der Rückenlehne kann eine ergonomiegerechte Sitzposition sowohl für Personen mit einem schmalen als auch für Personen mit einem breiten Körperbau sowie für klein- als auch großwüchsige Menschen eingestellt werden. Mit der erfindungsgemäßen Sitzverstellung kann für unterschiedliche Körpermaße der Fahrzeuginsassen eine optimale Unterstützung der zu stützenden Körperteile, wie insbesondere Sitzbeinhöcker, Beckenkamm, Schulterblätter, Brustkorb, Oberschenkel und Kopf, vorgenommen werden.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine perspektivische Darstellung des erfindungsgemäßen Fahrzeugsitzes, eingestellt für Insassen mit einem kleinen und schmalen Körperbau,
- Fig. 2:: eine perspektivische Darstellung des erfindungsgemäßen Fahrzeugsitzes, eingestellt für Insassen mit einem großen und breiten Körperbau,
- Fig. 3:: eine Seitenansicht des erfindungsgemäßen Fahrzeugsitzes mit abgeklappter Seitenwange,
- Fig. 4:: eine perspektivische Vorderansicht des erfindungsgemäßen Fahrzeugsitzes ohne Polsterteile und
- Fig. 5:: eine perspektivische Rückansicht des erfindungsgemäßen Fahrzeugsitzes ohne Polsterteile.

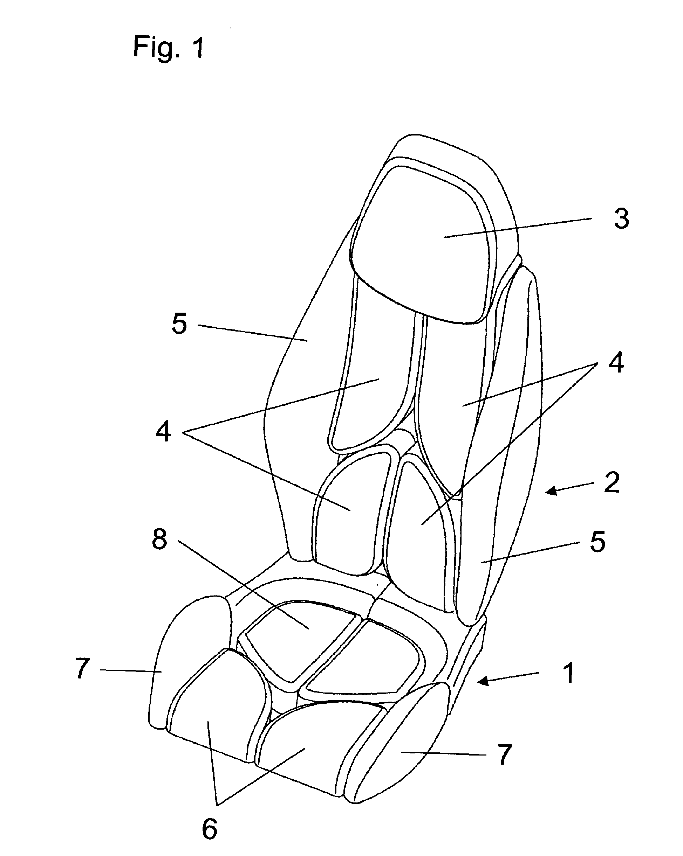

Der in Figur 1 dargestellte erfindungsgemäße Fahrzeugsitz ist in bekannter Weise innerhalb eines Fahrzeuges axial verschiebbar in Schienen gelagert und kann mit einer ebenfalls bekannten Höhenverstelleinrichtung versehen sein. Der Fahrzeugsitz besteht aus einer Sitzfläche 1 und einer Rückenlehne 2, die gegenüber der Sitzfläche 1 in ihrer Neigung in üblicher Weise manuell oder automatisch verstellbar ist. Erfindungsgemäß ist die Sitzfläche 1 und die Rückenlehne 2 unabhängig voneinander in der Länge der Sitzfläche 1 und in der Breite der vorderen Sitzfläche 1 sowie in der Länge und Breite der Rückenlehne 2 verstellbar. Dabei ist der vordere Bereich der Sitzfläche 1 in mehrere in Sitzlängs- und -querrichtung getrennte einzelne Polsterteile 6 und/oder die Anlehnfläche der Rückenlehne 2 in mehrere in Längs- und Querrichtung getrennte einzelne Polsterteile 4 unterteilt, wobei die Polsterteile 6 der Sitzfläche 1 und die Polsterteile 4 der Rückenlehne 2 unabhängig voneinander jeweils in zwei Dimensionen verstellbar angeordnet sind.

Im hinteren Bereich der Sitzfläche 1 ist ein nicht verstellbares Polsterteil 8 angeordnet, das fest mit einem Hauptträger 16 des Fahrzeugsitzes verbunden ist. In diesem Bereich besitzt die Sitzfläche 1 eine genügende Auflagefläche für das Körperteil, so dass eine Verstellung nicht notwendig ist. Eine Verstellung der Sitzfläche 1 ist in dessen vorderen Bereich insbesondere zur Auflage der Oberschenkel erforderlich. Beidseitig an den Außenseiten der Sitzfläche 1 sind Sitzwangen 7 und an den Außenseiten der Rückenlehne 2 sind Lehnenwangen 5 angeordnet, die jeweils mit den Polsterteilen 6 und 4 verschiebbar sind.

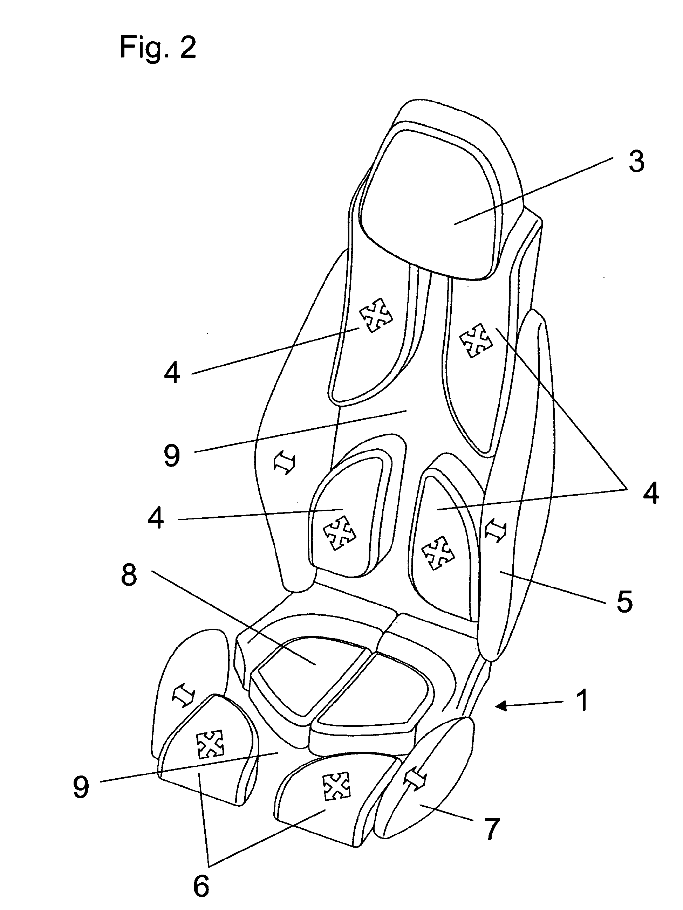

Bei schmalen und großen Personen werden die Polsterteile 6 und die Sitzwangen 7 nur in Längsrichtung der Sitzfläche 1 und die Polsterteile 4 der Rückenlehne 2 nur in Längsrichtung der Rückenlehne 2 verstellt. Gleichzeitig mit der Verstellung der Polsterteile 4 in Längsrichtung der Rückenlehne 2 erfolgt eine Längsverschiebung einer an der Rückenlehne 2 angeordneten Kopfstütze 3. Bei kleinen Personen mit einem breiten Körperbau erfolgt nur eine Verstellung der Polsterteile 6 und der Sitzwangen 7 quer zur Sitzfläche 1 und eine Verstellung der Polsterteile 4 und der Lehnenwangen 5 quer zur Anlehnfläche der Rückenlehne 2. Bei Personen mit einer normalen Körpergröße erfolgt entsprechend des Körperbaus eine Verstellung der Posterteile 6 und der Sitzwangen 7 sowie der Polsterteile 4 und der Lehnenwangen 5 in Längs- und in Querrichtung der Sitzfläche 1 bzw. der Anlehnfläche der Rückenlehne 2. Gleichzeitig mit einer Längsverstellung der Polsterteile 4 erfolgt eine Längsverschiebung der Kopfstütze 3. In der Figur 1 ist ein Fahrzeugsitz dargestellt, der so eingestellt ist, dass die Polsterteile 4, 6 und 8 den Körper eines kleinen, schmalen Menschen (5.%il, weiblich) optimal unterstützen. Figur 2 zeigt einen Sitz der so eingestellt ist, dass die Polsterteile 4, 6 und 8 den Körper eines großen, breiten Menschen (95.%il, männlich) optimal unterstützen.

Bei einer entsprechenden Längs- und Querverschiebung der Posterteile 6 und/oder 4 entstehen zwischen den einzelnen Polsterteilen 6 und 4 Zwischenräume 9. Durch die Zwischenräume 9 kann Körperwärme abgeführt werden. Diese passive Form der Klimatisierung vermeidet Wärmestaus und verhindert Diskomfort aufgrund durchgeschwitzter Kleidung.

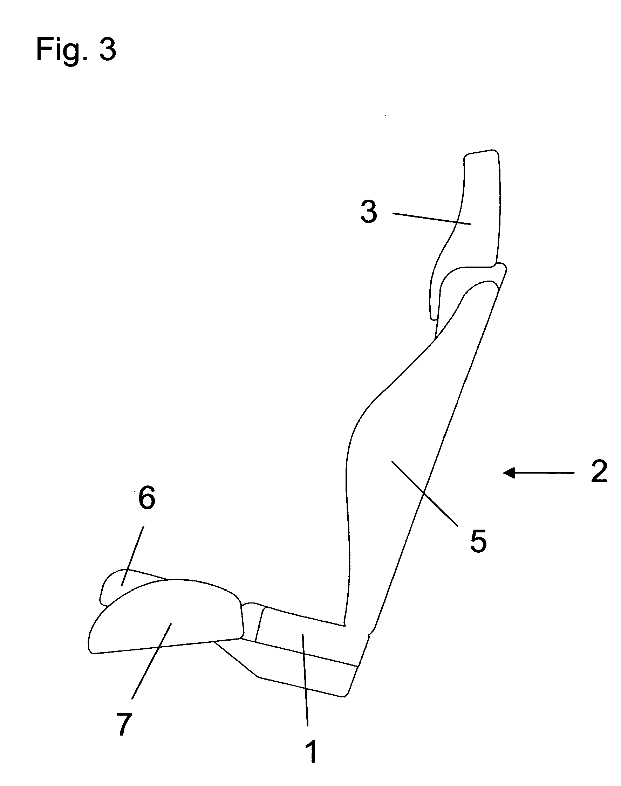

Die an den Außenseiten der Sitzfläche 1 angeordneten Sitzwangen 7 bestehen aus dem eigentlichen Polsterteil und einem tragenden Strukturelement 18, die jeweils beidseitig an den verstellbaren Hilfsträgern 17 der Sitzfläche 1 angeordnet sind. Die Strukturelemente 18 sind dabei jeweils mit den Hilfsträgern 17 um eine quer zum Fahrzeugsitz liegende Achse schwenkbar verbunden. Über eine entsprechende Rastverstellung lässt sich dabei die Höhe des vorderen Teils der Sitzwange einstellen.
Dabei sind die an der jeweiligen Fahrzeugtürseite befindlichen Strukturelemente 18 in eine tiefere Stellung schwenkbar angeordnet. Die Sitzwangen 7 haben die Aufgabe, die besonders in Kurvenfahrten auftretenden Fliehkräfte aufzunehmen und den Fahrzeuginsassen einen sicheren Halt zu geben. Die Sitzwangen 7 an der Fahrzeugtürseite behindern den Insassen allerdings beim Ein- und Aussteigen und werden dabei stark belastet. Es kommt zu erhöhtem Verschleiß an Bezug und Polster. Um dieses zu verhindern, können die an der Fahrzeugtürseite angeordneten Sitzwangen 7 aus einer Gebrauchslage in eine Nichtgebrauchslage nach unten verschwenkt werden. Die in Figur 3 dargestellte Nichtgebrauchsstellung dient dem leichteren Ein- und Aussteigen. In der Gebrauchsstellung wird die Wange arretiert. Die Abklappung kann manuell durch den Insassen oder automatisch, z. B. beim Öffnen der Tür, erfolgen.

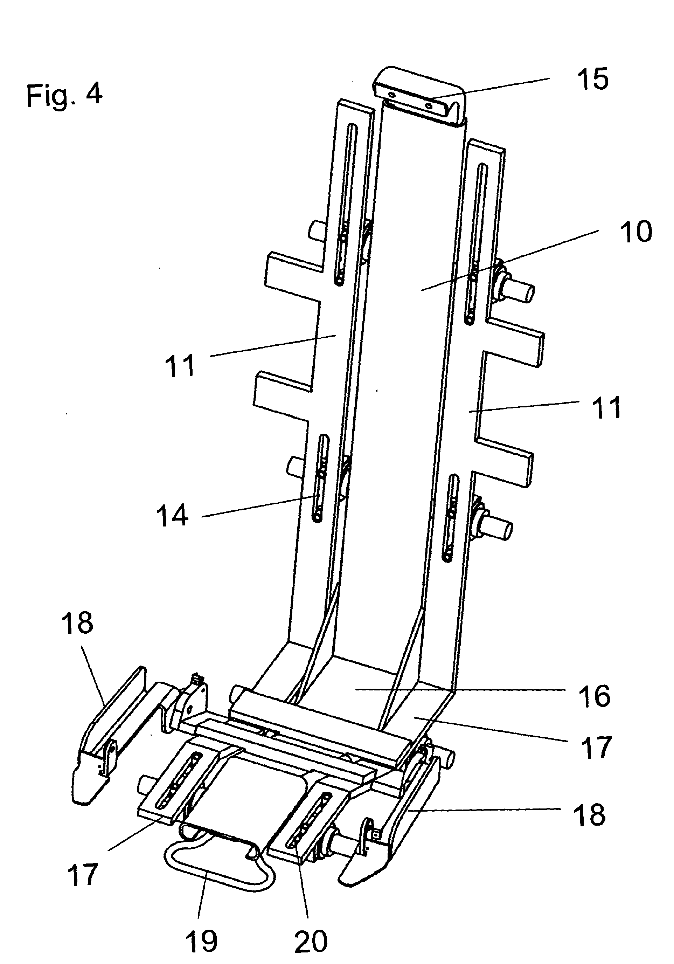

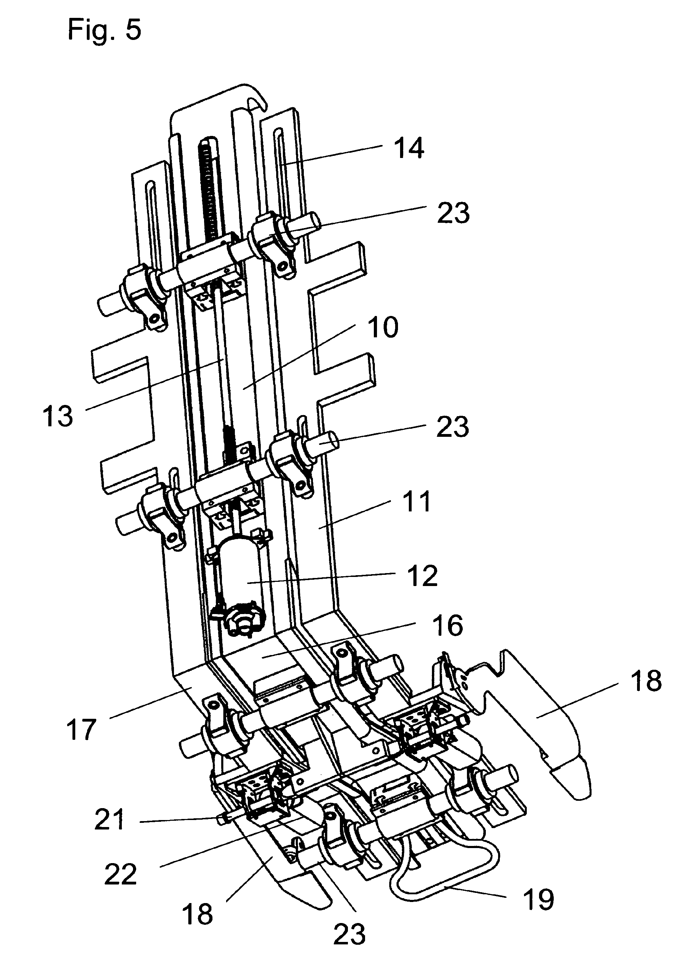

Die Verstellung der Polsterteile 4 und 6 kann durch einen mechanisch oder manuell betriebenen Antrieb erfolgen. In den Figuren 4 und 5 ist eine Variante des Aufbaus und der Verstellmöglichkeiten eines erfindungsgemäßen Fahrzeugsitzes dargestellt. Dabei besteht der Fahrzeugsitz aus einem die Rückenlehne 2 bildenden Hauptträger 10 und einem die Sitzfläche 1 bildenden Hauptträger 16, an denen beidseitig jeweils seitlich verschiebbare Hilfsträger 11 und 17 angeordnet sind. In den Figuren 4 und 5 sind jeweils die beiden Hauptträger 10 und 16 sowie die beiden Hilfsträger 11 und 17 fest miteinander verbunden, so dass nur eine gemeinsame seitliche Verstellung der Hilfsträger 11 und 17 erfolgen kann. Es ist aber durchaus möglich, die Hauptträger beweglich miteinander zu verbinden, so dass mit einer an sich bekannten Lehnenverstelleinrichtung die Rückenlehne 2 in ihrer Neigung gegenüber der Sitzfläche 1 verstellt werden kann.

In den Hilfsträgern 11 sind Langlöcher 14 und in den Hilfsträgern 17 sind Langlöcher 20 angeordnet, die zur axialen Verschiebung der Polsterteile 4 und 6 dienen. Zur axialen Verschiebung der Polsterteile 4 an der Rückenlehne 1 ist an der Rückwand des Hauptträgers 10 ein Antrieb 12 angeordnet, der über eine Spindel 13 mit einem Gewinde mit unterschiedlicher Steigung jeweils mit einer in den Langlöchern 14 geführten Verstelleinrichtung 23 in Wirkverbindung steht. Durch die unterschiedliche Gewindesteigung der Spindel 13 werden die unteren Polsterteile 4 der Rückenlehne 2 in einem anderen Verhältnis axial verstellt, als die oberen Polsterteile 4. Die Polsterteile 4 und 6 sind jeweils mit einer durch die Langlöcher 14 und 20 führenden Aufnahme der Verstelleinrichtung 23 verbunden, so dass beim axialen Verschieben der Verstelleinrichtung 23 auch die Polsterteile 4 und 6 verschoben werden. Eine Variante der erfindungsgemäßen Lösung sieht vor, dass die oberen und die unteren Polsterteile 4 der Rückenlehne 2 jeweils über einen separaten Antrieb 12 verstellt werden können.

Die oberste an der Rückenlehne 2 angeordnete Verstelleinrichtung 23 ist mit einer Kopfstützenbefestigung 15 verbunden, die verschiebbar an dem Hauptträger 10 angeordnet ist, so dass mit einer axialen Verschiebung der Polsterteile 4 die Kopfstütze 3 verschoben wird.

Zur Breitenverstellung des Sitzes werden die Hilfsträger 11 und 17 auf den waagerechten Linearführungen der Verstelleinrichtungen 23 symmetrisch zum jeweiligen Hauptträger 10 bzw. 16 verschoben. Diese Verschiebung kann bei Lehne und Sitzfläche unabhängig erfolgen, wenn getrennte Hilfsträger 11 und 17 und Antriebe 22 mit einer Spindel 21 eingesetzt werden.

Die Längsverschiebung der vorderen Sitzpolster 6 über die vordere Verstelleinrichtung 23 der Sitzfläche 1 kann manuell oder automatisch erfolgen. Bei einer manuellen Betätigung ist die Verstelleinrichtung 23 mit einem Griff 19 verbunden, während bei einer automatischen Betätigung die Verstelleinrichtung 23 mit einem entsprechenden Antrieb versehen ist.

Die einzelnen Polsterteile 4, 6 und 8 können mit einem elastischen Überzug versehen werden, so dass bei einer Breiten- oder Längsverstellung die entstehenden Zwischenräume 9 zwischen den einzelnen Polsterteilen nicht sichtbar sind. Es ist auch möglich, die Zwischenräume durch entsprechend angeordnete flexible Luftkammerelemente auszugleichen.

### Aufstellung der verwendeten Bezugszeichen

- 1: Sitzfläche
- 2: Rückenlehne
- 3: Kopfstütze
- 4: Polsterteil
- 5: Lehnenwange
- 6: Polsterteil
- 7: Sitzwange
- 8: Polsterteil
- 9: Zwischenraum
- 10: Hauptträger
- 11: Hilfsträger
- 12: Antrieb
- 13: Spindel
- 14: Langloch
- 15: Kopfstützenbefestigung
- 16: Hauptträger
- 17: Hilfsträger
- 18: Strukturelement
- 19: Griff
- 20: Langloch
- 21: Spindel
- 22: Antrieb
- 23: Verstelleinrichtung

## Patentansprüche

1. Fahrzeugsitz mit einer Sitzfläche und mit einer Rückenlehne, in denen Polsterungen angeordnet sind, die aus einer Mehrzahl von einzelnen in Sitzquerrichtung getrennten Polsterelementen bestehen, wobei die Polsterelemente der Sitzfläche gegenüber einem Sitzgestell und die Polsterelemente der Rückenlehne gegenüber einem Rückenlehnengestell längsverschieblich angeordnet sind,
**dadurch gekennzeichnet, dass**
die Sitzfläche (1) im vorderen Bereich in mehrere in Sitzlängs- und -querrichtung getrennte einzelne Polsterteile (6) und/oder die Anlehnfläche der Rückenlehne (2) in mehrere in Längs- und Querrichtung getrennte einzelne Polsterteile (4) unterteilt sind, wobei die Polsterteile (6) der Sitzfläche (1) unabhängig voneinander jeweils in Längs- und Querrichtung der Sitzfläche (1) und die Polsterteile (4) der Rückenlehne (2) unabhängig voneinander jeweils längs und quer zur Anlehnfläche der Rückenlehne (2) verstellbar angeordnet sind.

2. Fahrzeugsitz nach Anspruch 1,
**dadurch gekennzeichnet, dass**
beidseitig an den Außenseiten der Sitzfläche (1) Sitzwangen (7) und der Rückenlehne (2) Lehnenwangen (5) angeordnet sind, die jeweils mit den Polsterteilen (6) und (4) verschiebbar angeordnet sind.

3. Fahrzeugsitz nach Anspruch 1 bis 2,
**dadurch gekennzeichnet, dass**
im hinteren Bereich der Sitzfläche (1) ein mit einem Hauptträger (16) fest verbundenes Polsterteil (8) angeordnet ist.

4. Fahrzeugsitz nach Anspruch 1 bis 3,
**dadurch gekennzeichnet, dass**
die Verstellung der Polsterteile (4) und (6) durch einen automatisch oder manuell betriebenen Antrieb erfolgt.

5. Fahrzeugsitz nach Anspruch 1 bis 4,
**dadurch gekennzeichnet, dass**
der Fahrzeugsitz aus einem die Rückenlehne (2) bildenden Hauptträger (10) und einem die Sitzfläche (1) bildenden Hauptträger (16) besteht, an denen beidseitig jeweils seitlich verschiebbare Hilfsträger (11) und (17) angeordnet sind, die mit Langlöchern (14) und (20) zur axialen Verschiebung der Polsterteile (4) und (6) versehen sind.

6. Fahrzeugsitz nach Anspruch 1 bis 5,
**dadurch gekennzeichnet, dass**
zur axialen Verschiebung der Polsterteile (4) an der Rückwand des Hauptträgers (10) ein Antrieb (12) angeordnet ist, der über eine Spindel (13) mit unterschiedlicher Gewindesteigung jeweils mit einer in den Langlöchern (14) geführten Verstelleinrichtung (23) in Wirkverbindung steht.

7. Fahrzeugsitz nach Anspruch 1 bis 6,
**dadurch gekennzeichnet, dass**
jeweils an der Rückwand des Hauptträgers (10) und (16) ein Antrieb (22) mit einer Spindel (21) mit gegenläufigem Gewinde zur seitlichen Verschiebung der Hilfsträger (11) und (17) angeordnet ist.

8. Fahrzeugsitz nach Anspruch 1 bis 6,
**dadurch gekennzeichnet, dass**
die Hilfsträger (11) und (17) miteinander verbunden sind und gemeinsam über einen vorzugsweise an der Rückwand des Hauptträgers (16) angeordneten Antrieb (22) seitlich verschiebbar sind.

9. Fahrzeugsitz nach Anspruch 1 bis 8,
**dadurch gekennzeichnet, dass**
die Verstelleinrichtung (23) zur axialen Verstellung der Polsterteile (6) mit einem manuell betätigbaren Griff (19) oder mit einem mechanisch bedienbaren Antrieb verbunden ist.

10. Fahrzeugsitz nach Anspruch 1 bis 9,
**dadurch gekennzeichnet, dass**
die Sitzwangen (7) aus dem eigentlichen Polsterteil und einem tragenden Strukturelement (18) bestehen, wobei die Strukturelemente (18) jeweils mit den Hilfsträgern (17) um eine quer zum Fahrzeugsitz liegende Achse schwenkbar verbunden sind.
